# EUROPEAN PATENT APPLICATION

(11) **EP 1 519 348 A2**
(43) Date of publication of application: **30.03.2005**
(21) Application number: 04386012.1
(22) Date of filing: 13.04.2004
(51) Int. Cl.: G09F 27/00, H04N 7/173, G06F 17/60

(54) **System and method of two way audiovisual transmission of advertising messages in places of massive transportation and gathering**

(30) Priority: 09.04.2003 GR 2003100172
(71) Applicant: Zaggilis, Spiros, 54631 Thessaloniki (GR); Issopoulos, Aristides, 55131 Thessaloniki (GR)
(72) Inventor: Zaggilis, Spiros, 54631 Thessaloniki (GR); Issopoulos, Aristides, 55131 Thessaloniki (GR)

(57) **Abstract**

Through the system and method of the two way audiovisual transmission of messages, the audiovisual transmission of messages in means of massive transportation, waiting halls and places of gathering is accomplished, through the use of electronic-audiovisual equipment of up-to-date technology resulting in a superior output of audiovisual messages.

Through this way the viewer ― interested party is given the ability to handle the equipment in order to receive information through a printout as well as the ability of direct transaction with the advertised party and communication with the centre of operating and processing data through a telephone line.

The advantage of this invention is the direct transmission of messages from the centre of operating and processing data to the places of projection and the ability given to the interested party to communicate for whatever interests him/her from the messages displayed, through the previously mentioned system, either directly with the source (the instructor being advertised) or with the centre of operation and processing data which provides and coordinates the messages, as the equipment used makes the transmission of messages a two way transmission.

## Description

The idea-invention refers to the system, the method and the process of the audiovisual transmission of advertising messages from a TV screen, placed in shopping malls, cinemas, transportation starting points, squares, entertainment parks and generally in places of meeting and gathering. The above mentioned screen will also be placed in all means of transportation (private and public), such as ships, trains, busses, planes, metro, etc.
The ways of projection and promotion of messages, in most of the previously mentioned places are already known.

Posters made of paper are usually used, which are placed on walls, piers or in specific parts of transportation means, as well as posters in frames with the ability of revolving, thus projecting two or three at most advertising messages, which however remain the same for a long period of time without the ability of timely or even everyday change and replacement.

The disadvantages of the above processes, which already exist and being used refer to their technical application and implementation as well as to their financial implementation and the cost.
More specific, delay is observed in the rotation of messages, difficulty in the placement of the advertising posters, as well as compulsory employment and use of labour force.

Due to the above mentioned conditions the cost of the advertising and the cost of projection messages is raised, thus affecting both the clients-instructors, who seek to be advertised, and the company handling the projection.

Moreover the environmental pollution from the material used and destroyed is an additional disadvantage, as the basic material used is paper.

The advantages of this invention is the audiovisual projection of messages in places of massive arrival and movement, the low cost of advertising material, the timeliness and alternation of messages, the immediate intercession and modification of messages following the request of the client-instructor, the immediate transmission of the timeliness message at the moment of request, the alternation ability of numerous advertising messages, the promotion of products and services with the capability of immediate transaction and communication with the source-instructor, the ecological approach of the process and the avoidance of environmental pollution.

The modernization and the development of methods of informing the consumers and the travellers have as a result their immediate service as consumers and as tourists, as well as their notification as passengers, through audiovisuals messages which refer to their safe and better transportation (fire, accident, shipwreck, etc.), are also basic advantages of this invention.

For the implementation and the process of application of the idea the following are used: video projectors, televisions with plasma screens, a series of various inches screens, which combined together project one image (video wall), placed in spots of massive transportation as well as in crowded places in which audiovisual messages are being projected from the present place through decoders of digital audio content or information (DVD Audio Player), decoders of digital disks of audiovisual content or information (DVD Player), digital disks recorders of audiovisual content or information (DVD-R), decoders of compact digital audio information protocol based (MP-3 Player), decoders or reproducers of digital disk (CD Player), reproducers of video tape of audiovisual content (Video Player, analogue or digital), decoders of digital disk of high fidelity audio information (SACD Player), decoders of digital disks of audiovisual content or information, image receivers or image recorders (Camera or Camcorder), personal computers PC (Hard disk or CD) steadily connected to the above screens either through a cinema projector of images and transparencies (photo slides).

The placing of the above mentioned equipment on a steady and movable centre of transmission is required due to the economic difference of the transmission material as well as to the selection of messages according to the instructor being advertised (audio message only, visual message only, or both).

In some places such as waiting halls of travellers, or places of gathering and means of massive transportation, if it is possible, a special device is placed which is either made of wood or metal (Design 1) and is comprised of a frame, designed in such a way (Design 3) so that it can host the equipment on the picture. With this equipment the present station will be able to receive messages of live image projection, multimedia messages (MMS) and audio messages through satellite or internet (the images will be projected on the steady and movable screens previously mentioned.

The interested party-receiver of the message will have the ability to communicate with the transmitter through an open telephone line (fixed or mobile telephony), either through internet (visual contact), or to ask more information and to conduct a transaction for the products projected from the advertisers through internet. He/she will also be able to print information at the same time.

All the equipment is connected to the computer so that the instructions can be given by the centre. Equipment of satellite coverage will be placed in the most appropriate spot of means of massive transportation or in the places where people are gathering.

In intercity busses and in train wagons the transmission of the audiovisual messages will take place through television screens of various types and sizes with or without touch filters, which will be placed in the up front and in the central place of the vehicle standing on a metal construction. A telephone will be close to the screens for the direct service of the interested parties, through the company. In the case that the placing of the remainder equipment (Design 3) cannot be made in the inner part, where the passengers sit, it will be placed in the storage area of the vehicle. The handling of the supervision of the messages displayed and the informing of the interested parties will be made by the touch screen through which the promotion messages will be displayed. The touch screen will be connected with the computer so that it can receive analytical material for everything that is being displayed. The broadcasting antenna of satellite reception will be placed on the top of the vehicle.

Touch screens (small in size) will be placed in taxis, in the inner part of the vehicle, for use by the clients (according to the previously mentioned procedure) and beside them there will be a telephone in order for them to communicate and be served by the headquarters of the company. The remainder equipment (previously mentioned) will be placed in the storage area of the car. The satellite antenna will be placed on the top of the vehicle.

In city busses and in trams screens will be placed in the outer right side of the vehicle and in the inner part, where the passengers sit. The inner screen will be a touch screen and close to it there will be a telephone. The remainder equipment will be placed in the storage area of the vehicle or if it is possible in the inner part (so that the interested party can also operate the printer). The satellite antenna will be placed in the top of the vehicle. In ships, screens will be placed in gathering areas (living room, dining room, deck) and the remainder equipment will be placed in the specifically designed device (Design 1) which will be placed as close it can be to the screen that transmits the messages, from which the interested party will be able to receive a list of information, contact the headquarters of the company or transact with the instructor being advertised.

In an attempt to outline the technical characteristics of the new method we could refer to the following:

The reception and processing of image and sound can be done either by an internal production from the headquarters of the company or by an external production, through a mobile staff group of outside shooting and transmission.

The image reception can be made through one or more cameras depending on the needs of the production. Every source of image is checked through a video monitor and an oscillograph and it ends up in a console of image mixing.

The audio reception is made through one or more microphones (dynamic or condensing), depending on the needs of the production. The sources of the sound are being checked by an audio monitor and end up in a console of sound mixing.

As a temporary recording-storage mean a video recorder (analogue or digital) or a computer is being used.
The processing and the assembling of the recorded material are made with montage, using a video recorder. For the addition of titles and text a character generator is being used.

Moreover digital montage of video and audio is being made through a computer, with the use of the appropriate software and peripheral cards. Through the previously mentioned way the material can be modulated so that subtitles and text can be added.
The final outcome can be transmitted live or it can be recorded on video tapes of audiovisual content (Video cassette), in decoders of digital audio content or information (DVD Audio), in decoders of digital disk (CD).

The transmission of the material, from the centre of operating and processing data or from the outside transmission unit, can be made wired or wireless through the following ways:

With an array of computers connected through a satellite link, it can transmit data in the internet and the transmission of text, audio messages and video streaming is accomplished from one place to an other or from one place to more places at the same time. Also through satellite radio link for link with a television satellite, it accomplishes the transmission of messages from one transmission point to many receivers, within the range covered by the satellite.

The use of satellite radio link earthy link, accomplishes the transmission of messages from the transmission point to one point of reception.
Transmission to earthy television frequencies.

The mobile phone companies undertake the delivery of messages, small written messages (SMS), audio and visual multimedia messages (MMS). It can be sent directly to a telephone or to a computer through electronic mail (e-mail) from one point to another or from one point to many points at the same time.
With the use of suitable encoders messages can be transmitted through the fixed telephone network (optic fibre).

The two way communication is accomplishable with a computer through internet, with radio links, with small written messages (SMS), audio and visual multimedia messages, with electronic mail (e-mail) through mobile telephony and with audio telephone calls.

For the reproduction and transmission of messages from the centre of operating and processing data, the following material is required:

Regarding the reproduction of the material this can be reproduced depending on the way it has been stored in devices such as decoders of digital disks of audio content or information (DVD Audio Player), decoders of digital disks of audiovisual content or information (DVD Player), digital disks recorders of audiovisual content or information (DVD-R), decoders of compact digital audio information protocol based (MP-3 Player), decoders or reproducers of digital disk (CD Player), reproducers of video tape of audiovisual content (Video Player, analogue or digital), decoders of digital disk of high fidelity audio information (SACD Player), decoders of digital disks of audiovisual content or information, image receivers or image recorders (Camera or Camcorder), computers steadily connected with the above screens through cinema projector of images and transparencies (Photo Slides).

Regarding the reproduction of the material, this can reproduced, depending on the way of reception through devices such as a Satellite receiver, a TV tuner, a Radio tuner, a radio frequency receiver (RF - link receiver), personal computer (PC). The projection of the material can be made through cinema projection, printed material, audio means, through a TV monitor, through a series of screens which combined together project one image (Video wall), through one Video projector.

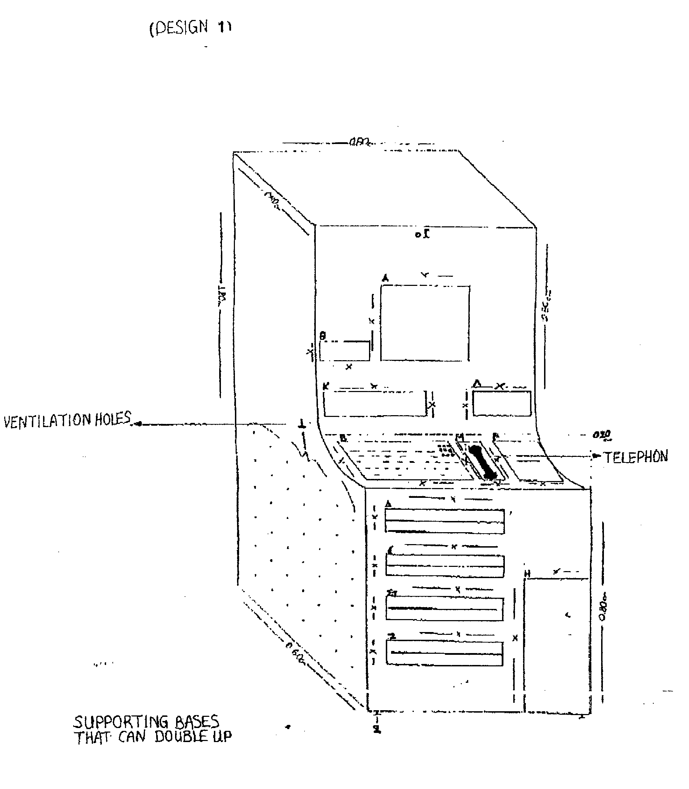

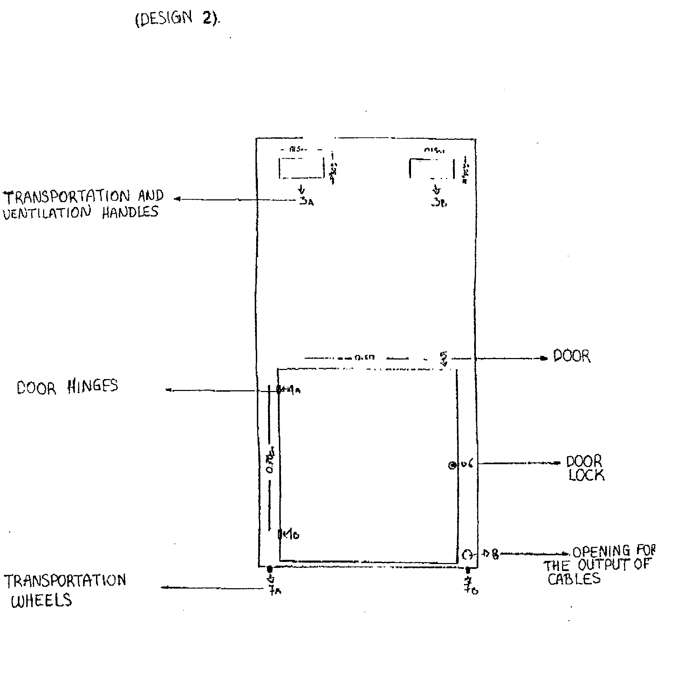

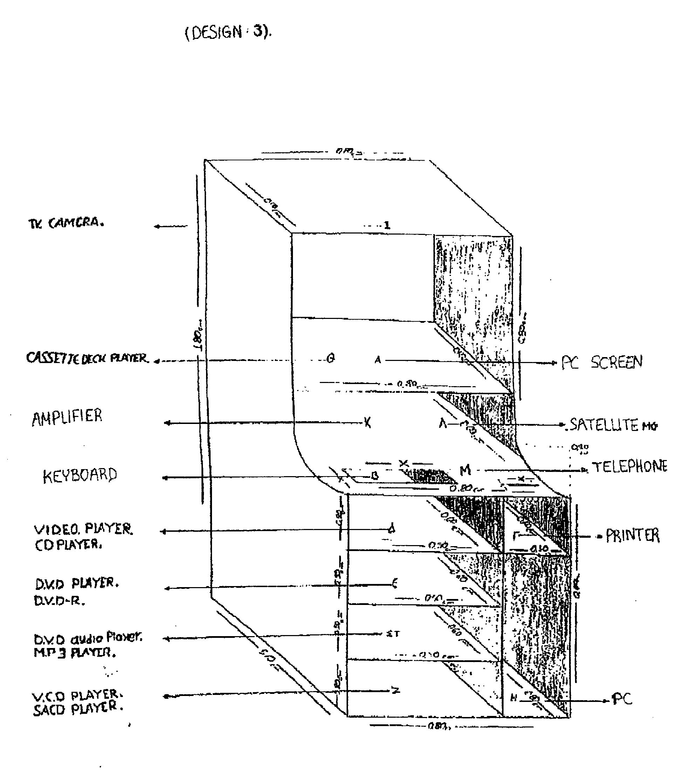

## Claims

1. The system of two way audiovisual transmission of advertising messages in places of massive transportation and gathering is **characterized by** and comprised of:
a) video projectors, plasma television screens, a series of various inches screens which combined together project one image (video wall), placed in spots of massive transportation as well as in places where people gather, in which audiovisual messages are being projected from the present place through decoders of digital audio content or information (DVD Audio Player), decoders of digital disks of audiovisual content or information (DVD Player), digital disks recorders of audiovisual content or information (DVD-R), decoders of compact digital audio information protocol based (MP-3 Player), decoders or reproducers of digital disk (CD Player), reproducers of video tape of audiovisual content (Video Player, analogue or digital), decoders of digital disk of high fidelity audio information (SACD Player), image receivers or image recorders (Camera or Camcorder), personal computers PC (Hard disk or CD) steadily connected with the above screens either through cinema projector of images and transparencies (Photo Slides).
b) personal computer and printer
c) telephone line
In some places such as waiting halls of travellers, or places of gathering and means of massive transportation, if it is possible, a special device is placed which is either made of wood or metal (Design 1) and comprised of a frame, designed in such a way so that it can host the previously mentioned equipment. With this equipment the present station will be able to receive, through satellite or internet, messages of live image projection, multimedia messages (MMS) and audio messages (the images will be projected on the steady and movable screens).

2. The method of the two way audiovisual transmission of advertising messages in places of mass transportation and gathering is **characterized by** the fact that it can be used by the interested party in such a way:
The interested viewer can communicate for whatever interests him/her, from the messages displayed, through the previously mentioned system either directly. with the source (the instructor being advertised) or with the transmitter which provides and coordinates the messages (centre of operating and processing data), through telephone communication as the equipment used makes the transmission of messages a two way transmission.
More specific, with the use of the previously mentioned devices audiovisual messages are being displayed from the present projection station through the already processed transmission material and the reception of satellite transmission is made from the centre of operating and processing data.
As a transmitter we regard the centre of operating and processing data, where with the necessary equipment the ability to transmit the audiovisual messages, according to customer requests, is being provided, at the time of their choice.
Through this way the viewer - interested party is given the ability to handle the equipment in order to receive information through a printout as well as the ability of direct transaction with the advertised party and communication with the centre of operating and processing data.

3. The system and method of the two way audiovisual transmission of messages in places of massive transportation and gathering, as this is mentioned in Assumption 1 which refers to the system of the invention, is **characterized by** the fact that in order for the messages to be reproduced and transmitted from the centre of operating and processing data, the following material can be used:
Regarding the reproduction of the material, this can be reproduced depending on the way it has been stored in devices such as decoders of digital disks of audio content or information (DVD Audio Player), decoders of digital disks of audiovisual content or information (DVD Player), digital disks recorders of audiovisual content or information (DVD-R), decoders of compact digital audio information protocol based (MP-3 Player), decoders or reproducers of digital disk (CD Player), reproducers of video tape of audiovisual content (Video Player, analogue or digital), decoders of digital disk of high fidelity audio information (SACD Player), decoders of digital disk of audiovisual content or information, image receivers or image recorders (Camera or Camcorder), personal computers, steadily connected with the above screens through cinema projector of images and transparencies (Photo Slides).
Regarding the reproduction of the material, this can reproduced depending on the way of reception through devices such as a satellite receiver, a TV tuner, a radio tuner, a radio frequency receiver (RF - link receiver), personal computer (PC). The projection of the material can be made through cinema projection, printed material, audio means, through a TV monitor, through a series of screens which combined together project one image (Video wall), through one Video projector.

4. The system and method of the two way audiovisual transmission of messages in places of massive transportation and gathering, as this is mentioned in Assumption 1 which refers to the system of the invention, is **characterized by** the ability of using a magnetic card. The magnetic card will be placed in a specifically designed cavity, and through its use the direct transaction between the interested party and the advertised party will be accomplished.
